# EUROPÄISCHE PATENTSCHRIFT

(11) **EP 3 766 928 B1**
(45) Veröffentlichungstag und Bekanntmachung des Hinweises auf die Patenterteilung: **25.03.2026**
(21) Anmeldenummer: 20184501.3
(22) Anmeldetag: 21.09.2018
(51) Int. Cl.: C08K 5/103, E04D 5/06, C08K 5/29, E04D 5/10, C08K 5/11

(54) **VERWENDUNG EINER ZUSAMMENSETZUNG, ENTHALTEND EIN CARBODIIMID UND EINEN POLYESTERWEICHMACHER ALS WEICHMACHER FÜR POLYVINYLCHLORID ODER POLYVINYLCHLORID-COPOLYMERE**
USE OF A COMPOSITION COMPRISING A CARBODIIMIDE AND A POLYESTER PLASTICIZERS AS PLASTICIZERS FOR POLYVINYLCHLORIDE OR POLYVINYLCHLORIDE COPOLYMERS
UTILISATION D'UNE COMPOSITION COMPRENANT UN CARBODIIMIDE ET UN PLASTIFIANT DE POLYESTER COMME PLASTIFIANTS POUR POLYCHLORURE DE VINYLE ET COPOLYMÈRES DE POLYCHLORURE DE VINYLE

(30) Priorität: 22.09.2017 DE 102017122065; 27.10.2017 DE 102017125324
(43) Veröffentlichungstag der Anmeldung: 20.01.2021
(62) Teilanmeldung aus: 18785525.9
(73) Patentinhaber: BASF SE, 67056 Ludwigshafen (DE)
(72) Erfinder: SIMONIS, Udo, 63549 Ronneburg (DE); GLÜCK, Johannes, 97762 Hammelburg (DE); FRANKE, Ute, 61130 Nidderau (DE)
(74) Vertreter: BASF IP Association

(56) Entgegenhaltungen:
- EP-A1- 3 243 871
- WO-A1-2007/096356
- WO-A1-2016/026835
- WO-A1-2017/194360
- JP-A- H07 304 917

## Beschreibung

Die Erfindung bezieht sich auf die Verwendung einer Zusammensetzung enthaltend zumindest ein Carbodiimid und zumindest einen Polyesterweichmacher als Weichmacher für Polyvinylchlorid oder Polyvinylchlorid-Copolymer. Die Erfindung wird am Beispiel der Verwendung dieses Weichmachers in einer PVC-Dachbahn erläutert, Dachbahnen selbst und ihre Herstellung sind jedoch nicht Gegenstand dieser Erfindung und werden hiermit nicht beansprucht.

Abdichtbahnen, insbesondere Dachbahnen enthalten üblicherweise ein Grundpolymer basierend auf Polyvinylchlorid (PVC), Polyvinylchloridcopolymere, Ethylen-Vinylacetat-Terpolymere, Ethylen-Vinylacetat-Copolymere (z.B. Ethylene/n-butyl Acrylate/carbon monoxide or Ethylene/vinyl acetate/carbon monoxide) sowie einen Weichmacher, der ausreichend gute weichmachende Wirkung aufweist. Auch ist bei der Auswahl darauf zu achten, dass neben der Vielzahl an anderen Anforderungen eine besondere Beständigkeit gegenüber Wasser Medien gegeben ist. Weiterhin sollte bei polymerweichgemachten sowie innenweichgestellten PVC/EVA Bahnen eine Medienbeständigkeit insbesondere für Medien basierend auf Bitumen, Polystyrol und Polyurethan gegeben sein, d.b. Wechselwirkungen im Sinne von Migration sollten möglichst gering ausfallen.

Bei der Verwendung von esterbasierten Weichmachern zum Beispiel Phthalsäureester oder polyesterbasierten Polymerweichmachern z. B. basierend auf Adipinsäure oder Sebacinsäure als polymerer Weichmacher ist eine Hydrolyse möglich. Durch die Hydrolyse werden die langkettigen Weichmacher zu den Ausgangsstoffen Alkohol und Dicarbonsäure mit der Folge abgebaut, dass ein Migrieren der Abbau- bzw. Hydrolyseprodukte zur Oberfläche der Dachbahn auftritt. Gleichzeitig nimmt die Konzentration der weichmachenden Komponente ab, was zu einer Verringerung der Flexibilität der Dachbahn führt.

Durch spezielle Hydrolysestabilisatoren - welche H+ Ionen/Protonenfänger sind - kann der Abbau durch Hydrolyse verbessert werden.

Üblicherweise werden Phthalsäureester als Weichmacher für nicht bitumenverträgliche Abdichtungsbahnen im gro-ßen Maßstab eingesetzt. Auch hier ist der Mechanismus der Hydrolyse bekannt.

Die WO 20017/096356 A1 betrifft eine Kunststofffolie umfassend eine Mischung aus Polyvinylchlorid (PVC) und mindestens einem thermoplastischen Polyurethan und deren Verwendung zur Abdichtung oder Auskleidung von Behältern für das Aufbewahren oder Fördern von Biodiesel. In der WO 2007/096356 A1 werden ausschließlich Folien beschrieben, ohne dass sich ein Hinweis auf eine Dachbahn findet.

Die CH 55 10 944 betrifft ein Verfahren zur Herstellung von thermoplastisch verarbeitbaren Kunststoffgemischen auf der Basis Polyurethan-Polyvinylchlorid, wobei Polyvinylchlorid zunächst mit den für die Herstellung des Polyurethans benötigten Ausgangsstoffen intensiv unterhalb der Reaktionstemperatur von nicht und danach allmählich in der Wärme zu einem Polyvinylchlorid enthaltenden thermoplastisch verarbeitbaren Polyurethan umsetzt. In der CH 55 10 944 werden ausschließlich Folien und Testplatten beschrieben, ohne dass sich Hinweis auf eine Dachbahn befindet.

Der vorliegenden Erfindung liegt die Aufgabe zugrunde, einen Hydrolysestabilisator zur Verfügung zu stellen, der zu einer ausreichenden Hydrolysebeständigkeit von Weichmachern führt.

Gleichzeitig soll sichergestellt sein, dass sowohl die mechanischen Eigenschaften als auch alle wesentlichen Eigenschaften einer Dachbahn - wie z. B. Witterungsbeständigkeit, Verarbeitungsverhalten (Nahtfügung) - nicht nachteilig beeinflusst werden.

Zur Lösung sieht die Erfindung die Verwendung einer Zusammensetzung gemäß der Ansprüche dieses Patents vor.

Während des Herstellungsprozesses des Weichmachers werden nicht komplett alle freie Säuregruppen der Carbonsäure durch die Polymerisation in eine Estergruppe umgewandelt. Diese freien Säuregruppen werden durch die sogenannte "Säurezahl" charakterisiert. Im Allgemeinen kann die Säurezahl insoweit beschrieben werden, dass diese alle sauren Funktionen, welche durch Kalilaugen neutralisierbar sind, erfasst.

Esterbasierte Weichmacher, z. B. polyesterbasierte Polymerweichmacher sind durch säurekatalytische Hydrolyse gefährdet. Der Abbau des Polymerweichmachers hängt von der Säurezahl des Ausgangsproduktes, d. h. des Polymerweichmachers, ab. Versuche haben gezeigt, dass der Abbau des Weichmachers schneller stattfindet, je höher die Säurezahl des Ausgangsproduktes ist.

Folglich sind die Säurezahlen so niedrig wie möglich einzustellen. Bevorzugte esterbasierte Polymerweichmacher weisen eine Säurezahl von 0,1 - 1, vorzugsweise 0,3 - 0,5 auf.

Insbesondere ist vorgesehen, dass ein polyesterbasierter Weichmacher, insbesondere basierend auf Adipin- oder Sebacinsäure, verwendet wird.

Insbesondere sieht die Erfindung vor, dass als Ausgangsrohstoffe für den polyesterbasierten Weichmacher benutzt werden in Gew.-%:

| | |
|---|---|
| Dicarbonsäure | 52,0 ± 6,6, bevorzugt 55,4 ± 3,0, besonders bevorzugt 57,1 ± 1,9 |
| Neopentylglykol | 22,0 ± 20,0, bevorzugt 15,0 ± 7,0, besonders bevorzugt 14,1 ± 2,1 |
| weiteres Diol | 13,3 ± 12,0, bevorzugt 18,1 ± 6,0, besonders bevorzugt 17,3 ± 2,9 |
| Alkoholgemisch | 12,7 ± 11,0, bevorzugt 11,5 ± 6,0, besonders bevorzugt 11,5 ± 2,3 |

wobei die Gesamtsumme 100 beträgt.

Insbesondere ist vorgesehen, dass Ausgangsrohstoffe in Gew.-% des Adipin- oder Sebacinsäureesters ist:
- zumindest eine Dicarbonsäure aus der Gruppe Adipinsäure, Sebacinsäure
- 52,0 ± 6,6, bevorzugt 55,4 ± 3,0, besonders bevorzugt 57,1 ± 1,9, Neopentylglykol 22,0 ± 20,0, bevorzugt 15,0 ± 7,0, besonders bevorzugt 14,1 ± 2,1
- zumindest einem weiteren Diol aus der Gruppe Butandiol, Propandiol 13,3 ± 12,0, bevorzugt 18,1 ± 6,0, besonders bevorzugt 17,3 ± 2,9,
- zumindest ein Alkoholgemisch aus der Gruppe Isononanol, Isodecanol 12,7 ± 11,0, bevorzugt 11,5 ± 6,0, besonders bevorzugt 11,5 ± 2,3,
wobei die Gesamtsumme 100 beträgt.

Mit anderen Worten kann der Endgruppenverschluss Isononanol oder Isodecanol sein.

Weiterhin sei erwähnt, dass es sich bei Isononanol und Isodecanol jeweils um ein Isononal- oder Isodecanol-Gemisch handeln kann.

Insbesondere ist vorgesehen, dass die Hauptbestandteile des Isononanols vorwiegend aus 1-Nonanol, Monomethyloctanolen, Dimethylheptanolen und Monoethylheptanolen bestehen.

Überraschenderweise hat sich herausgestellt, dass dann, wenn ein Hydrolysestabilisator zumindest ein aliphatisches Carbodiimid gemäß der Ansprüche enthält, eine deutliche Verbesserung der Hydrolysebeständigkeit gegeben ist, wobei gleichzeitig die wesentlichen Eigenschaften im Vergleich zu Abdichtbahnen, die einen entsprechenden Hydrolysestabilisator nicht enthalten, unverändert bleiben.

Insbesondere ist vorgesehen, dass Anteil in Gew.-% des den zumindest ein Carbodiimid enthaltenden Hydrolysestabilisators 0,1 - 5, insbesondere 0,5 - 2 beträgt.

In Weiterbildung der Erfindung ist vorgesehen, dass neben dem zumindest Carbodiimid enthaltenden Hydrolysestabilisator ein Thermostabilisator enthalten ist. Als Thermostabilisator kommen insbesondere basierend auf Ca/Zn One-Pack-Stabilisatoren, Ba/Zn oder auch ein organischer Thermostabilisator wie z.B. OBS^{®} der Firma Chemson in Frage.

Ein One-Pack-Ca/Zn-Stabilisator setzt sich bevorzugt zusammen aus
a) Ca/Zn (aus Stearaten, Octoaten, Behenaten, Carboxylaten) mit Ca/Zn im Verhältnis 2:1 bis 1:1, bevorzugt 2:1, vorzugsweise 7,5 bis 20 % je Anteil, insbesondere 15 % Ca und 10% Zn,
b) 50 - 70 Gew.-%, vorzugsweise 55 - 65 Gew.-%, insbesondere 60 Gew.-% Hydrotalcit,
c) 0,2 - 8 Gew.-%, vorzugsweise 0,5 - 7 Gew.-%, insbesondere 5 Gew.-% Gleitmittel,
d) 0,2 - 6 Gew.-%, vorzugsweise 0,5 - 4 % Gew.-%, insbesondere 2 Gew.-% Antioxidantien und
e) 0,2 - 6 Gew.-%, vorzugsweise 0,5 - 4 Gew.-%, insbesondere 3 Gew.-% Fließhilfen.

Die Verwendung von Hydrotalciten zeichnet sich durch eine besonders geringe Wasseraufnahme sowie eine erhöhte Stabilität aus. In Kombination mit Ca/Zn wird eine hohe Wetterbeständigkeit erreicht. Gleitmittel sind in dem Umfang enthalten, um eine Verarbeitungshilfe für Anlagen bereitzustellen. Durch Antioxidantien wird eine erhöhte Thermostabilität erreicht. Fließhilfen dienen als Einarbeitungs- und Dispersionshilfen.

Bevorzugterweise ist das zumindest ein Carbodiimid ausgewählt aus der Gruppe bestehend aus monomeren aliphatischen Carbodiimiden, oligomeren aliphatischen Carbodiimiden, polymeren aliphatischen Carbodiimiden, monomeren aromatischen Carbodiimiden, oligomeren aromatischen Carbodiimiden und polymeren aromatischen Carbodiimiden.

Die erfindungsgemäß eingesetzten aliphatischen Carbodiimide können in weiten Bereichen variieren. Geeignete Carbodiimide werden beispielsweise in der EP 0 628 541, DE 43 189 79 A1 oder der DE 198 21 666 A1 beschrieben. Insbesondere geeignete Carbodiimide werden beispielsweise durch die allgemeine Formel beschrieben: 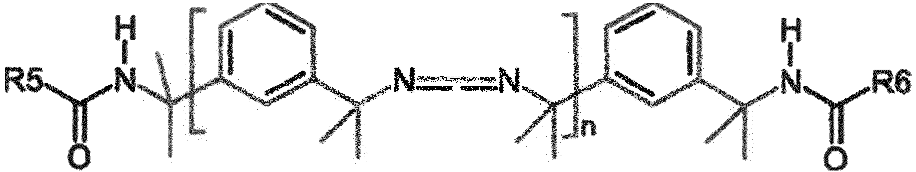
wobei n = 1 bis 20 ist und
R5 und R6 methoxylierte Polyethylenglykolreste der Formel: -(EO)m-OCH3 mit m = 1 bis 20 sind.

Das molare Verhältnis an zugesetzten Carbodiimid-Gruppen zu dem anfänglichen Säuregehalt des eingesetzten Esters kann in weiten Bereichen variieren und liegt erfindungsgemäß vorzugsweise im Bereich 20 : 1 bis 1 : 10, bevorzugt 10:1 bis 1 : 2.

Gemäß einer weiteren Ausführungsform ist vorgesehen, dass das molare Verhältnis an zugesetzten Carbodiimid-Gruppen zu dem anfänglichen Säuregehalt des eingesetzten Esters im Bereich von 20 : 1 bis 1 : 10 liegt.

Insbesondere enthält eine Dach- oder Abdichtbahn ein Grundpolymer, einen polymeren Weichmacher auf Basis eines Adipinsäure- oder Sebacinsäurepolyesters mit einem mittleren Molekulargewicht von 3.000 bis 12.000 und/oder einen monomeren Weichmacher z.B. basierend auf Phthalsäureestern, und/oder ein Polyacrylat und/oder ein kautschukartiges Polymer, das sich bevorzugt aus (a) 40 bis 80, vorzugsweise 50 bis 80 und insbesondere 55 bis 75 Gew.-% Butylacrylat oder gegebenenfalls einer Mischung von Butylacrylat und 2-Ethylhexylacrylat enthaltend bis zu 40 Gew.-% 2-Ethylhexylacrylat, (b) von 5 bis 35, vorzugsweise von 5 bis 20 Gew.-% mindestens einer Substanz ausgewählt aus der Gruppe bestehend aus Methylmethacrylat, Ethylmethacrylat, Methylacrylat oder Ethylacrylat (c) von 4 bis 30 vorzugweise 6 bis 30, insbesondere 10 bis 25 Gew.-% Acrylnitril, (d) von 3 bis 25 vorzugsweise 5 bis 18, insbesondere 8 bis 14 Gew.-% Styrol, (e) von 0,5 bis 8, vorzugsweise 1 bis 5, insbesondere 2 bis 4 Gew.-% einer Maleathalbesterseife und von 0,25 bis 8, vorzugsweise 0,5 bis 4, insbesondere 1 bis 3 Gew.-% eines Vernetzungsmittels zusammensetzt.

Als Grundpolymere werden Polyvinylchlorid (PVC) oder auch Polyvinylchloridcopolymere verwendet. Mischungen von diesen sind ebenfalls einsetzbar. Das Grundpolymer wird beispielsweise in Anteilen von 20 bis 60 Gew.-%, bevorzugt von 35 bis 55 Gew.-% eingesetzt. Sämtliche Angaben in Gew.-% beziehen sich hierbei auf die gesamte Zusammensetzung.

Der Adipinsäure- oder Sebacinsäurepolyester wird beispielsweise in Anteilen von 20 bis 45 Gew.-%, bevorzugt von 25 - 35 Gew.-% eingesetzt. Dichtungsbahnen aus Zusammensetzungen mit solchen Anteilen an Adipinsäure- oder Sebacinsäurepolyester weisen eine besonders eine sehr gute Verträglichkeit zu Bitumen und Polystyrol als auch eine hohe Migrationsbeständigkeit auch bei erhöhten Temperaturen auf. Ebenfalls sind hohe Kerbschlagzähigkeit und eine hohe Schlagzugzähigkeit als eine positive Eigenschaft aufzulisten. Die Schlagzugzähigkeit wird in Anlehnung an DIN EN ISO 8256 sowie gemäß DIN 53453 ermittelt.

Ferner kann die Zusammensetzung zur Herstellung einer Dichtungsbahn ein Polyacrylat enthalten. Als einsetzbare Polyacrylate kommen beispielsweise Ethyl-Butylacrylat, Butylacrylat, Copolymere aus Acrylsäure und Vinylchlorid, MMA oder PMMA in Frage. Die Polyacrylatkomponente trägt erheblich zur Verbesserung der Alterungs- und Witterungsbeständigkeit der Dichtungsbahnen bei und wird hauptsächlich bei zweischichtigen oder mehrschichtigen Systemen in den Oberschichten eingesetzt.

Von den oben genannten Polyacrylaten ist der Einsatz von Butylacrylat besonders bevorzugt.

In der Zusammensetzung kann das Polyacrylat in Form von mit PMMA oder MMA gecoateten Butylacrylat-Teilchen eingesetzt werden. Diese Butylacrylat-Teilchen haben vorzugsweise eine mittlere Teilchengröße von 100 mm oder weniger, ganz besonders bevorzugt liegt die mittlere Teilchengröße zwischen 5 und 40 mm.

Ein anderes Polyacrylat ist ein Copolymer aus Acrylsäure mit Vinylchlorid, insbesondere ein Pfropf-Copolymer aus diesen Verbindungen. Derartige Pfropf-Copolymere werden in bevorzugter Weise als Granulat mit einer Teilchengröße zwischen 0,25 und 5 mm, besonders bevorzugt zwischen 1 und 2 mm eingesetzt.

Die eingesetzten Polyacrylate haben ein mittleres Molekulargewicht von 5.000 bis 120.000, bevorzugt von 10.000 bis 100.000.

Die verwendeten Polyacrylate werden bei den Zusammensetzungen beispielsweise in Anteilen von 3 bis 30 Gew.-%, bevorzugt von 8 bis 25 Gew.-%, insbesondere 10 bis 20 Gew.-% eingesetzt. Dichtungsbahnen aus Zusammensetzungen mit solchen Anteilen an Polyacrylaten weisen eine besonders hohe Alterungsbeständigkeit auf und lassen sich auch sehr gut bei niedrigen Temperaturen verarbeiten.

Besonders bevorzugt ist der Einsatz des unter dem Handelsnahmen Sunigum^{®} von Goodyear oder Omnova Solutions vertriebenen kautschukartigen Polymers. In den erfindungsgemäßen Dachbahnen wird das Polymer in Mengen von 1 bis 30, vorzugsweise 5 bis 20 und insbesondere 8 bis 15 Gew.-% eingesetzt.

Der Adipinsäurepolyester ist insbesondere aus Adipinsäure und 1,4-Butandiol aufgebaut. Varianten mit 1,3 Propandiol sind ebenso gebräuchlich.

Die Zusammensetzungen der Dach- oder Dichtungsbahnen können darüber hinaus weitere Zusätze wie Füllstoffe, Pigmente, Farbstoffe, UV-Stabilisatoren, Thermostabilisatoren, Fungizide, Biozide, Verarbeitungshilfen und zusätzliche Weichmacher enthalten. Diese zusätzlichen Weichmacher sind bevorzugt niedermolekulare, monomere Weichmacher sein wie beispielsweise Phthalsäureester (Phthalate). Als Weichmacher können außerdem die üblichen aus dem Stand der Technik bekannten mit PVC verträglichen Weichmacher eingesetzt werden. Typische Weichmacher sind beispielsweise Derivate der Sylvinsäure oder Essigsäurederivate wie beispielsweise Cumylphenylacetat, Derivate der Adipinsäure wie Benzyloctyladipat, Dibutyladipat, Diisobutyladipat, Di-(2-ethylhexyl)adipat, Diisononyladipat, Derivate der Azelainsäure, Benzoesäurederivate, Polyphenylderivate, Zitronensäurederivate, epoxidierte Fettderivate sowie Glycolderivate. Weiterhin können auch biobasierte Weichmacher eingesetzt werden, d. h. Weichmacher die (zumindest teilweise) nachwachsende Rohstoffe enthalten, wie diese beispielsweise in der EP 3 156 447 A1 beschrieben sind.

Bevorzugt enthält die Zusammensetzung jedoch weniger als 30 Gew.-% an zusätzlichen Weichmachern, besonders bevorzugt weniger als 15 Gew.-%.

Zur Erhöhung der Thermostabilität der Bahnen können zusätzlich aus dem Stand der Technik bekannte Wärmestabilisatoren wie z. B. Ba/Zn-Stabilisatoren vorzugsweise Ca/Zn-Stabilisatoren enthalten sein. Daneben können auch zusätzlich noch UV-Stabilisatoren enthalten sein, wie beispielsweise Oxalanilide, Amide,. Titandioxid, Ruß, insbesondere Tinuvin^{®} und/oder Chimasorb^{®} und/oder insbesondere NOR-HALS Stabilisatoren. Üblicherweise sind die Stabilisatoren jeweils in Mengen von 0,01 bis 10, vorzugsweise 0,1 bis 5 Gew.-% enthalten. Üblicherweise übersteigt die Gesamtmenge an Stabilisatoren nicht 20 Gew.-% der Mischung.

Tinuvin^{®}, vorzugweise Tinuvin XT 833 wirkt nicht nur als UV-Stabilisator, sondern auch als Säurefänger, wodurch die Hydrolyse verbessert wird. Der Stabilisator Tinuvin XT 833 fängt zusätzlich die Salzsäure und verbessert das Alterungsverhalten so, wie die Hydrolysestabilität.

Tinuvin XT 833 ist gelistet gemäß Sicherheitsdatenblatt als Produkt mit einem Anteil von 40 - 60 Gew. % der CAS Nr.: 25973-55-1, wodurch die chemische Bezeichnung wie folgt hinterlegt ist: 2-(2H-Benzotriazol-2-yl)-4,6-di-tert-pentylphenol. Dementsprechend können auch Substanzen welche der Zusammensetzung des Tinuvin XT 833 entsprechen jedoch unter anderem Produktnamen geführt werden, ebenfalls verwendet werden.

Als Füllstoffe können die Bahnen die üblichen aus dem Stand der Technik bekannten Füllstoffe enthalten, wie beispielsweise Kreide, Talkum, Kieselsäuren oder Kaolin als Füllstoff. Die Menge an Füllstoffen beträgt 0 bis 15, bevorzugt 1 bis 10 Gew.-%.

Kreide wird bevorzugt als gecoatete Kreide eingesetzt. Kaolin verbessert sowohl die Abriebs- als auch die Medienbeständigkeit.

Kaolin besitzt ebenfalls einen sauren Charakter was sich z.B. mittels pH-Wert beschreiben lässt: hier liegt im Durchschnitt der pH-Wert zwischen 4,5 und 6,5. Vergleichsweise besitzt Essigsäure einen pH-Wert von 4,75. Dementsprechend wir in einer Anwendung der Einsatz von Kreide, besonders gecoateter Kreide, bevorzugt, um den Säureanteil in der Rezeptur niedrig zu halten.

Daneben können noch weitere übliche Inhaltsstoffe enthalten sein, wie beispielsweise Gleitmittel, Verarbeitungshilfsmittel, Gelierhilfen, UV-Wandler, UV-Stabilisatoren oder Biozide wie beispielsweise Thiazolinderivate, Tributylzinn, Chlorisothiazolin, besonders bevorzugt sind Isothiazolinderivate.

Eine Dach- oder Dichtungsbahn kann darüber hinaus eine Faserverstärkung aufweisen. Diese Faserverstärkung kann in einem Vlies, einem Gelege und/oder einem Gewebe bestehen. Dabei kann die Faserverstärkung aus Fasern bestehen, die ausgewählt sind, aus Glas-, Mineral-, Polyester-, Polyamid-, Polyethylen-, Polypropylenfasern oder aus Mischungen von diesen.

Insbesondere weist eine Dach- oder Dichtungsbahn eine innen liegende Einlage oder Verstärkung auf.

Auch kann eine Dach- oder Dichtungsbahn zumindest an einer Seite mit einer kaltselbstklebenden Schicht ausgestattet sein.

Alternativ kann eine Dach- oder Dichtungsbahn wenigstens auf einer Seite mit einem Haftklebstoff beschichtet sein. In diesem Falle kommen die an sich bekannten Haftklebstoffsysteme in Frage, insbesondere Acrylatklebstoffe oder auch Klebstoffe auf Polyurethanbasis oder auch bituminöse Selbstklebemassen.

Es ist ebenso möglich, die kaltselbstklebende Beschichtung oder den Haftklebstoff auch auf beiden Seiten einer Dach- oder Dichtungsbahn vorzusehen. Ebenso ist es möglich, eine Seite einer Dach- oder Dichtungsbahn mit einer kaltselbstklebenden Beschichtung auszurüsten und die andere Seite der Dichtungsbahn mit einem Haftklebstoff.

Als Thermostabilisator kann weiterhin eine Kombination mit mindestens einem Hydrotalcit verwendet werden, welches die Wasseraufnahme begrenzt und zusätzlich eine Verbesserung der Hydrolysestabilität erzielt.

Versuche haben gezeigt, dass die Wirksamkeit gegen Freiwerden von Salzsäure (HCl) von dem Oxiran-Gehalt des hochmolekularen Glycidesters bzw. des epoxidierten Sojabohnenöls abhängig ist.

Insbesondere wird für ein Standard ESBO (epoxidiertes Sojabohnenöl) ein Material ausgewählt, welches einen möglichst hohen Oxiran-Gehalt aufweist.

Vorzugsweise wird ein epoxidiertes Sojabohnenöl bzw. ein hochmolekularer Glycidester mit einem hohen Oxiran-Gehalt ausgewählt. Der Oxiran-Gehalt sollte zwischen 5 und 12 Gew.-%, vorzugsweise zwischen 8 und 11 Gew.-%, insbesondere > 9 Gew.-% betragen.

Durch einen hohen Oxiran-Gehalt wird insbesondere die Hydrolysebeständigkeit verbessert und die Bindung des Chlorwasserstoffs erhöht, wie die nachfolgende Formel verdeutlicht:

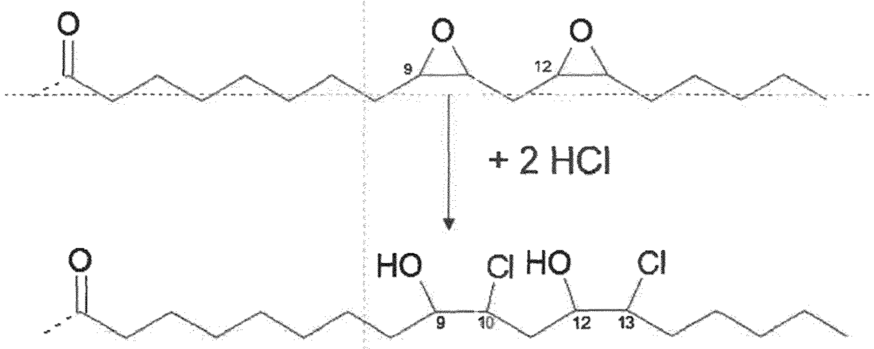

Für die beiden oben genannten Verfahren wird durch Mischen der beiden Komponenten eine homogenisierte Endmischung hergestellt. Da es sich bei esterbasierten Polymerweichmachern und hochmolekularen Glycidestern, wie epoxidiertes Sojabohnenöl um höherviskose Flüssigkeiten handelt, sollte das Mischen in einem Rührbehälter mit erhöhter Temperatur geschehen. Die Temperaturen sind im Bereich zwischen 50 und 100 °C zu wählen, bevorzugt zwischen 70 und 90 °C.

Weiterhin ist bevorzugterweise der flüssige Hydrolysestabilisator in die höherviskose Flüssigkeit einzumischen, d.h. in den Polymerweichmacher in das Rührwerk unter Rühren einzufüllen. Dieser sollte zuvor bereits auf Temperatur eingestellt sein, die zu einer niedrigviskoseren Flüssigkeit und damit besseren Transportierbarkeit führt. Anschließend wird durch die Reibungsenergie während des Rührvorgangs sowie über beheizbare Rührbehälterwände die Temperatur des Polymerweichmachers konstant gehalten, um eine optimale Einmischung des Hydrolysestabilisators vornehmen zu können.

Das Verhältnis zwischen höherviskoserer Flüssigkeit (Polymerweichmacher und/oder epoxidiertes Sojabohnenöl) zu flüssigem Hydrolysestabilisator kann im Verhältnis variiert werden. Bevorzugt ist hier ein Verhältnis 3:1, d.h. eine Zugabe von 4 Gew.-% entspricht einer Zugabe von 3 Gew.-% hochviskoser Flüssigkeit und 1 Gew-% flüssigem Hydrolysestabilisator.

Das Compoundieren bzw. die Mischungsherstellung bzw. Dry-blend Mischung von PVC Rezepturen ist dem Fachmann allgemein bekannt und wird z.B. in folgendem Bericht ausführlich beschrieben "Industrial Compounding Technology of Rigid and Plasticised PVC" von W. Henschel und P. Franz (PVC Technology, Fourth Edition 1984, W.V. Titow). Im Compoundieren für Weich-PVC Artikeln hat sich das batchweise Mischen durchgesetzt wobei hierzu meistens eine Heiz-Kühl-Mischer Kombination verwendet wird.

Es zeigt sich eine besondere Vermengung der einzelnen Rezepturbestandteile, wenn folgender Mischvorgang gewählt wird:
Es werden alle Feststoffe, d.h. das Grundpolymer sowie weitere Zusatzstoffe festen Bestandteils z.B. Füllstoffe und Pigmente zusammen in den Heißmischer gegeben und bereits vorgemischt für eine Zeitdauer von ca. 1 bis 1,5 Minuten. Anschließend wird der Rezeptur die erste Hälfte des Weichmachers hinzugegeben und bis zu einer Temperatur von 70 bis 90 °C gemischt. Sodann wird die zweite Hälfte des Weichmachers dem Heizmischer hinzugegeben und bis zu einer Temperatur von z.B. 110 bis 185 °C gemischt, um eine trockene Endmischung zu Erhalten. Anschließend wird die Mischung an den Kühlmischer übergeben und zu geringerer Temperatur vorzugsweise 40 bis 60 °C heruntergekühlt. Im Kühlmischer können weichmacheraffine Produkte wie z.B. Acrylate und/oder kautschukartige Polymere hinzugegeben werden.

Weiterhin ist zu beachten, dass Verarbeitungstemperaturen von 5 bis 10 °C höherer Temperatur gewählt werden als die Endtemperatur der Mischung beträgt.

Weiterhin sei angemerkt, dass das beschriebene Mischvorgehen beispielsweise für ein Mischen folgenden Ablaufs verwendet werden kann:
- Zugabe der Feststoffe und/oder der Kleinstmengen an Flüssigkeiten in den Heißmischer - diese Materialien können bereits vorgemischt werden wobei dies nicht zwingend notwendig ist.
- Zugabe der ersten Hälfte der weichmachenden Komponente in das System und einer Aufheizung zu Temperaturen zwischen 65 bis 90 °C
- anschließend Zugabe der zweiten Hälfte der weichmachenden Komponente in das System und mischen bis zu einer Temperatur von 110 bis 190°C (abhängig von der Mischeinheit)
- Überführung in einen Kühlmischer in welchem weichmacheraffine Produkte hinzugegeben werden können.

Beispielsweise sei eine Mischungsherstellung für folgende Zusammensetzung (Z₁) genannt:
Suspensions PVC K70 zu 45,0 - 55,0 %, Kreide zu 3,0 - 10,0 %, eine weichmachende Komponente basierend auf einem polymeren Weichmacher basierend auf einem Adipinsäurepolyester sowie einem weiteren Weichmacher basierend auf einem monomeren Weichmacher (ein Phthalsäureester) zu 28,0 - 38,0 %, als zu 1,5 - 7,0 %, einem Ca/Zn Stabilisator zu 0,5 - 4,0 %, einem Co-Stabilisator basierend auf einem epoxidierten Sojabohnenöl zu 1,5 - 5,0 %, einen grauen Pigmentanteil von 2,0 - 8,0 % sowie einem Hydrolysestabilisators basierend auf Carbodiimid Bestandteilen zu 0,2 - 5,0 %.

Zu Beginn des Mischvorgangs werden die Feststoffe, d.h. PVC, Kreide sowie der Pigmentanteil in den Rührkessel - d. b. den Heißmischer - zugegeben. Die Mengen werden über ein zuvor gesteuertes Wägeschalensystem abgewogen und entsprechend zudosiert. Diese Materialien werden ohne spezielle Temperierung für ca. 1 bis Minuten vorgemischt. Anschließend wird die erste Hälfte der weichmachenden Komponenten der ersten Mischung zugegeben und bis zu einer Temperatur von 70 - 90 °C gemischt wobei die Wärme durch Scherung der einzelnen Komponenten entsteht. Bei 70 - 90 °C wird nun der zweite Teil der weichmachenden Komponente zugegeben und bis zu einer Temperatur von 110 bis 165 °C, bevorzugt 115 - 130 °C, um einen homogenen und fein dispergierten Dry Blend ohne Agglomeratbildung zu erhalten. Anschließend wird die Dry blend Mischung in den Kühlmischer transportiert und dort heruntergekühlt durch oder auch wassergekühltem Behälter.

Das epoxidierte Sojabohnenöl kann einerseits zu den Feststoffkomponenten hinzugegeben werden oder bei der Zugabe des ersten oder zweiten Anteils der weichmachenden Komponente hinzugegeben werden.
Der Hydrolysestabilisator kann einerseits
- im epoxidierten Sojabohneöl bereits vorab eingemischt werden, z.B. mittels eines zuvor geschalteten Mischtanks und dieses während der Feststoffkomponentenzugabe oder während der Zugabe des ersten oder zweiten Anteils der weichmachenden Komponente mit eingemischt werden;
- andererseits kann der Hydrolysestabilisator in die Feststoffkomponenten direkt hinzugegeben;
- in einer weiteren Ausführungsform zuvor in die weichmachende Komponente eingearbeitet wofür Z.B. ein Vormischtank für die weichmachende Komponente verwendet werden kann.

Bei einer abgeänderten Zusammensetzung (Z₂) wird zusätzlich ein Acrylat der Zusammensetzung hinzugegeben mit einem Anteil von 5,0 - 15, 0 %. Dieses Acrylat kann sowohl zur Vormischung der festen Bestandteile als auch erst zu einem späteren Zeitpunkt während des Transports in den Kühlmischer zugegeben werden. Die zweite Variante ist zu bevorzugen um ein hineindiffundieren des Weichmachers in das Acrylat zu verhindern und die Weichmacheraufnahme des PVC dementsprechend zu minimieren. Außerdem verhindert die verspätete Zugabe des Acrylates ein Verblocken und somit eine eingeschränkte Funktion davon ausgehend.

Es besteht somit die Möglichkeit, den Hydrolysestabilisator enthaltend zumindest ein Carbodiimid direkt in den Polymerweichmacher oder durch Einarbeitung in epoxidiertes Sojabohnenöl oder in das Masterbatch der Mischung oder in der Zusammensetzung vorhandenen basierend auf Ca/Zn One-Pack-Stabilisator, Ba/Zn einzuarbeiten, wobei grundsätzlich die flüssige Form zu bevorzugen ist, gleichwenn als Bestandteil vom Masterbatch die Pulverform zu wählen ist.

Zur Herstellung von Dachbahnen kann die Endmischung (End-dry-blend-Mischung) entweder direkt über einen Zweischneckenextruder oder über einen Kalander verarbeitet werden.

Ein Zwischenschritt der Granulierung ist gleichfalls möglich.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von Beispielen.

Anhand der nachstehenden Ausführungsbeispiele wird die stabilisierende Wirkung des erfindungsgemäßen Hydrolysestabilisators erläutert.

Bekanntlich sind esterbasierte Weichmacher, z.B. polyesterbasierte Polymerweichmacher durch säurekatalytische Hydrolyse gefährdet. Dabei hängt von der Säurezahl des Ausgangsproduktes, das heißt des Polymerweichmachers, der Abbau des Polymerweichmachers ab. Das heißt, je höher die Säurezahl des Ausgangsproduktes desto schneller findet der Abbau des Weichmachers statt.

Während des Herstellungsprozesses des Weichmachers entstehen freie Säuregruppen, die durch die sogenannte "Säurezahl" charakterisiert werden. Im Allgemeinen kann die Säurezahl insoweit beschrieben werden, dass diese alle sauren Funktionen, welche durch Kalilauge neutralisierbar sind, erfasst.

Es wurden daher zwei verschiedene Polyesterweichmacher basierend auf Adipinsäure hinsichtlich der zeitlichen Veränderung der Molmassenverteilung (Molekulargewichtsverteilung) nach dem Gelpermeations-Chromatografie (GPC)-Verfahren in Abhängigkeit von der Zeit bestimmt. Zum einen wurde ein Polyesterweichmacher eines Typs I (polyesterbasierter Weichmacher basierend auf Adipinsäure und einem Endgruppenabschluss mittels Isononanol) benutzt, dessen Säurezahl des Ausgangsproduktes 0,4 mgKOH/g betrug. Die Säurezahl eines zweiten Polyesterweichmachers Typ II (polyesterbasierter Weichmacher basierend auf Adipinsäure, mit einem Endgruppenabschluss mittels Isononanol und mit einem abweichenden Molverhältnis bzgl. der Zusammensetzung der verwendeten Diole im Vergleich zum Typ II betrug 0,66 mgKOH/g. Aus der Tabelle erkennt man, dass das Zahlenmittel des Molekulargewichts bzw. Gewichtsmittel des Molekularmassengewichts in Abhängigkeit von der Zeit zunimmt, wobei die Zunahme des Typs I stärker als des Typs II war, also der Gewichtsverlust geringer bei denjenigen Weichmachern war, deren Ausgangssäurezahl kleiner war, wie die nachstehende Tabelle zeigt:
Polyesterweichmacher Typ I ¹⁾

| Lagerzeit | 0d | 28d | 42d | 56d | 70d |
|---|---|---|---|---|---|
| Mn | 3100 | 2200 | 1700 | 1400 | 1200 |
| Mw | 6600 | 4600 | 3400 | 2700 | 2200 |
| Gewichtsverlust [%] | 0 | -0,5 | -4,42 | -16,3 | -23 |

| | | | | | |
|---|---|---|---|---|---|
| ¹⁾ polyesterbasierter Weichmacher basierend auf Adipinsäure und einem Endgruppenabschluss mittels Isononanol | | | | | |

Polyesterweichmacher Typ II ²⁾

| Lagerzeit | 0d | 28d | 42d | 56d | 70d |
|---|---|---|---|---|---|
| Mn | 2600 | 1800 | 1400 | 1200 | 1000 |
| Mw | 5600 | 3700 | 2700 | 2100 | 1700 |
| Gewichtsverlust [%] | 0 | -0,5 | -7,1 | -17,8 | -23,5 |

| | | | | | |
|---|---|---|---|---|---|
| ²⁾ polyesterbasierter Weichmacher basierend auf Adipinsäure, einem Endgruppenabschluss mittels Isononanol und einem veränderten Molverhältnis bezüglich der Zusammensetzung der verwendeten Diole im Vergleich zu Typ I. | | | | | |

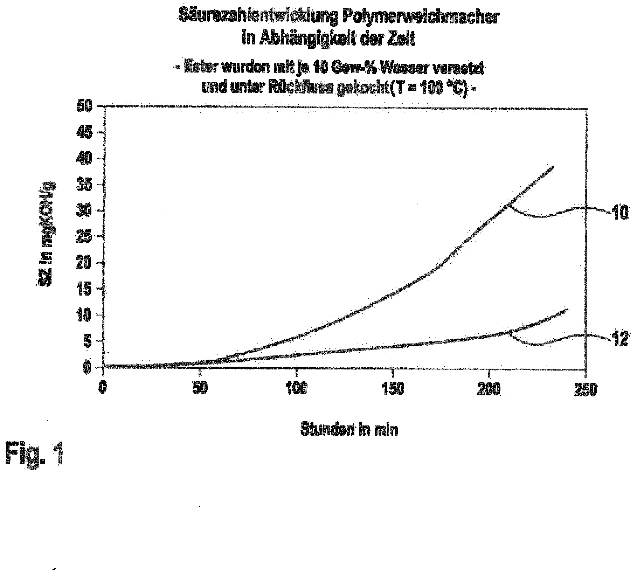

Die Gewichtsveränderung spiegelt sich auch entsprechend in der Änderung der Säurezahl wider. Dies ergibt sich aus der Figur 1, in der die Säurezahl mgKOH/g gegen die Zeit aufgetragen ist. Die Kurve 10 stellt die zeitliche Veränderung der Säurezahl eines polyesterbasierten Weichmachers basierend auf Adipinsäure dar, dem kein Hydrolysestabilisator beigegeben ist.

Wird demgegenüber dem Polyesterweichmacher ein erfindungsgemäßer Hydrolysestabilisator zugegeben, der 1 Gew.-% Carbodiimid bezogen auf den Weichmacher enthält, so wird ein erheblich geringerer Anstieg der Säurezahl festgestellt, wie die Kurve 12 in der Figur 1 verdeutlicht.

Zu erwähnen ist, dass jeweils nur der Weichmacher betrachtet wurde. Zur Durchführung der Messungen wurde der Polyesterweichmacher jeweils mit 10 Gew.-% Wasser versetzt und unter Rückfluss gekocht (T = 100 °C).

Entsprechende Ergebnisse werden auch durch nachstehende (Vergleichs-)Versuche anhand von Dachbahnen bestätigt, die ein Grundpolymer, einen polymeren Weichmacher in Form eines Adipinsäurepolyesters sowie ein Polyacrylat enthalten.

So wurden 1,5 mm dicke handelsübliche bitumenverträgliche PVC Dachbahnen entsprechend der Stoffzusammensetzung beschrieben in DIN SPEC 20000-201 Tabelle 2 - "Werkstoffbezeichnungen und Zusammensetzung der Kunststoffe und Elastomere" als PVC Bahn durch Extrusion hergestellt, wobei hier ein Adipinsäurepolyester als sog. Polymerweichmacher eingesetzt wurde, wobei der Acrylatgehalt > 3% beträgt (Zusammensetzung Z₃): PVC 45 bis 55 %, Kreide 4,0 bis 10,0 %, Acrylat 3,0 - 12,0 %, Polymerweichmacher 27,0 bis 36,0 %, epoxidiertes Sojabohnenöl 1,0 bis 5,0 %, Ca/Zn Stabilisator 1,0 bis 5,0 % sowie Pigmente zu 0,5 bis 4,0 %.

Die Summe ergibt 100 %.

Der Polymerweichmacher basiert auf Adipinsäure / Sebacinsäure 55,0 bis 59,0 Gew.-%, Neopentylglykol 12 - 16 Gew.-%, Butandiol 15,5 bis 19,5 Gew.-% und Isononanol 10,0 bis 13,0 Gew.-%. Die Summe ergibt 100 in Gew.-%.

Der Hydrolysestabilisator basierend auf Carbodiimid Bestandteilen wird zu 0,5 bis 4 % einer der beiden Mischungen hinzugegeben.

Das Ca/Zn OnePack Thermostabilisatorsystem besteht aus Hydrotalciten, Calciumsalzen von Fettsäuren, Zinksalze von Fettsäuren, Antioxidantien, Costabilisatoren.

Sodann wurden Verträglichkeitstests durchgeführt, bei dem die Proben bei 70 °C und 100% Feuchtigkeit über vorgegebene Zeiten gelagert wurden. Alternativ können diese Untersuchungen auch bei 80 °C und 100 % Luftfeuchtigkeit durchgeführt werden.

Verglichen wurden die Werte jeweils mit einer Nullprobe. Die Nullprobe bezüglich des Nasswerts war eine Probe, dessen Gewicht eine Stunde nach Entnahme aus der Feuchtekammer bestimmt wurde. Der Trockenwert der Nullprobe war derjenige, bei dem das Gewicht der entsprechenden Probe 16 Stunden bei 70 °C getrocknet und anschließend eine Stunde zur Abkühlung auf Raumtemperatur konditioniert worden ist.

| | Probe ohne Hydrolysestabilisator A | | | Probe mit Hydrolysestabilisator B | | |
|---|---|---|---|---|---|---|
| | Nasswert | | Trockenwert | Nasswert | | Trockenwert |
| | Gew.-% | Beurteilung | Gew.-% | Gew.-% | Beurteilung | Gew.-% |
| 1d | 0,80 | 0 | -0,19 | 0,76 | 0 | -0,19 |
| 3d | 1,39 | 0 | -0,35 | 1,16 | 0 | -0,26 |
| 7d | 2,22 | 0 | -0,27 | 1,78 | 0 | -0,28 |
| 14d | 3,08 | 0 | -0,27 | 2,18 | 0 | -0,28 |
| 28d | 4,25 | 0 | -0,36 | 2,46 | 0 | -0,34 |
| 42d | 5,91 | 0-1 grau* | -0,47 | 3,18 | 0 | -0,38 |
| 56d | 9,23 | 5 grau** | -0,70 | 3,39 | 0 | -0,46 |
| 71d | 11,85 | 5 grau** | -1,04 | 4,09 | 0 | -0,54 |

| | | | | | | |
|---|---|---|---|---|---|---|
| * wenig trockener Belag ** deutlicher grauer und trockener Belag | | | | | | |

Die Werte in der Beurteilung entsprechen folgenden Angaben:
- 0: = trockener Griff, die Folie ist glatt und trocken (beste Verträglichkeit)
- 1: = stumpfer Griff, die Folie ist noch trocken, eine geringe Weichmachermenge befindet sich auf der Oberfläche und ergibt einen stumpfen Griff. Fingerspuren sind sichtbar
- 2: = klebriger Griff, es ist schon merklich Weichmacher an der Oberfläche ausgetreten, Fingerspuren sind leicht und deutlich zu erkennen
- 3: = schwacher, trockener Belag; mit bloßem Auge erkennbar
- 4: = schwacher, flüssiger oder schmieriger Belag
- 5: = starker trockener Belag
- 6: = starker schmieriger Belag

Erkennbar weisen die Proben B, deren Weichmacher den erfindungsgemäßen Hydrolysestabilisator enthielten, bessere Ergebnisse als die ohne Hydrolysestabilisator (A) auf. Der Nasswert und der Trockenwert waren reduziert.

Von entsprechenden Proben wurden sodann Molmassenverteilungen (Molekulargewichtsverteilungen) nach dem Gelpermeations-Chromatografie (GPC) - Verfahren bestimmt. Die Ergebnisse waren Folgende:
Proben A ohne erfindungsgemäßen Hydrolysestabilisator:

| | 0d | 14d | 28d | 42d | 56d | 71d |
|---|---|---|---|---|---|---|
| Mn | 2200 | 2200 | 2100 | 2100 | 2000 | 1900 |
| Mw | 4800 | 4700 | 4500 | 4300 | 4000 | 3700 |
| D | 2,1 | 2,1 | 2,1 | 2,1 | 2,0 | 2,0 |
| FI.% < 1000 | 8,5 | 8,6 | 9,3 | 9,7 | 10,8 | 11,5 |
| FI.% < 500 | 2,4 | 2,3 | 2,6 | 2,6 | 2,9 | 3,0 |

Dabei bedeuten:
- Mn: = Zahlenmittel des Molekulargewichts
- Mw: = Gewichtsmittel des Molekularmassegewichts
- D: = Polydispersität (D = Mw : Mn)
- FI % <1000: = prozentualer Anteil Moleküle kleiner als 1000 g/mol
- D: = Tage

Proben B mit erfindungsgemäßem Hydrolysestabilisator ergaben folgende Werte:

| | 0d | 14d | 28d | 42d | 56d | 71d |
|---|---|---|---|---|---|---|
| Mn | 2200 | 2200 | 2200 | 2100 | 2100 | 2100 |
| Mw | 4900 | 4900 | 4800 | 4800 | 4600 | 4500 |
| D | 2,2 | 2,2 | 2,2 | 2,2 | 2,2 | 2,1 |
| FI.% < 1000 | 9,1 | 8,8 | 9,0 | 9,0 | 10,0 | 9,6 |
| FI.% < 500 | 2,7 | 2,4 | 2,5 | 2,5 | 2,8 | 2,5 |

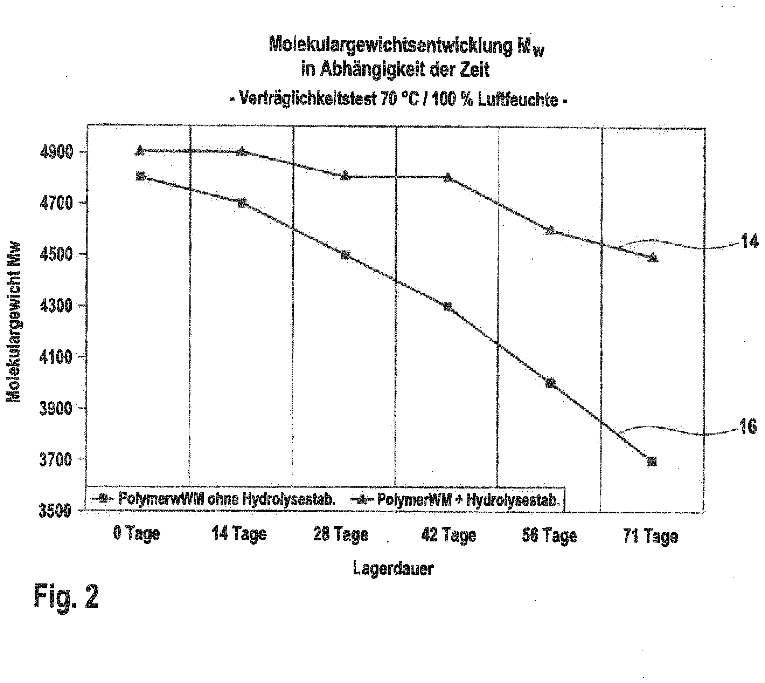

Die Anderung des Molekulargewichts ist grafisch auch in der Fig. 2 dargestellt. Die obere Kurve 14 zeigt die Änderung des Molekulargewichts von Proben mit dem erfindungsgemäßen Stabilisator, die untere Kurve 16 ohne den Stabilisator. (In der Fig. 2 bedeutet WM = Weichmacher).

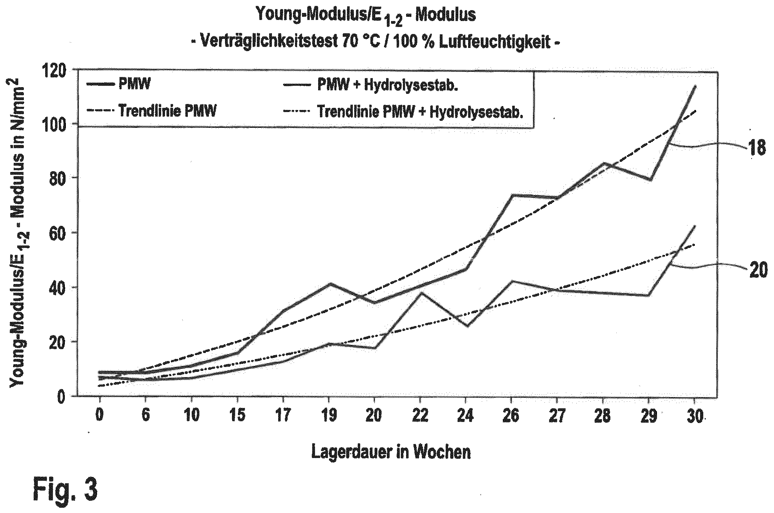

In der Figur 3 ist die zeitliche Änderung von Dachbahnen der Zusammensetzung Z₃ dargestellt, die einen Hydrolysestabilisator mit einem Carbodiimid (Kurve 18) und ohne einen solchen enthielten (Kurve 20). Dabei ist Young-Modulus/E1-2-Modulus gegenüber der Lagerdauer in Wochen aufgetragen. Der Verträglichkeitstest wurde bei 70 °C und 100 % Luftfeuchtigkeit durchgeführt.

In weiteren Versuchen wurden Verträglichkeitstests an handelsübliche bitumenverträgliche PVC Dachbahnen entsprechend der Stoffzusammensetzung beschrieben in DIN SPEC 20000-201 Tabelle 2 - "Werkstoffbezeichnungen und Zusammensetzung der Kunststoffe und Elastomere" als PVC Bahn durch Extrusion hergestellt, wobei hier ein Adipinsäurepolyester als sog. Polymerweichmacher eingesetzt wurde wobei der Acrylatgehalt < 3% beträgt (Zusammensetzung Z₄):
PVC 45 bis 55 %, Kreide 4,0 bis 10,0 %, Acrylat 0,5 - 3,0 %, Polymerweichmacher 27,0 bis 36,0 %, epoxidiertes Sojabohnenöl 1,0 bis 5,0 %, Ca/Zn Stabilisator 1,0 bis 5,0 % sowie Ruß zu 0,5 bis 4,0 %. Der Hydrolysestabilisator basierend auf Carbodiimidbestandteilen zu 0,5 bis 4,0 % hinzugegeben.

Die Summe ergibt 100 %.

Dabei wurden Dachbahnen mit und ohne Hydrolysestabilisator mit zumindest einem Carbodiimid benutzt. Der Verträglichkeitstest wurde bei 70 °C und 100 % Feuchtigkeit über die angegebenen Zeiten durchgeführt. Die Bewertung der Proben entspricht zuvor angegebener Beurteilungstabelle.

In der Spalte 1 ist die Zeitdauer der Lagerung angegeben. In der Spalte 2 sind die Ergebnisse der Proben aufgelistet, die bei einer Dachbahn obiger Zusammensetzung Z₃ ermittelt worden sind, bei dem zuvor dem Polymerweichmacher ein Hydrolysestabilisator eingearbeitet worden ist, der ein Carbodiimid enthielt. Der Gewichtsanteil des Hydrolysestabilisators betrug 1 Gew.-% bezogen auf das Endprodukt.

[In der Spalte 3 ist eine Dachbahn der Zusammensetzung Z₃ überprüft worden, indem ein Hydrolysestabilisator nicht enthalten ist. Der Füllstoff Kreide wurde durch Kaolin ersetzt. Bereits nach 21 Wochen ergab sich ein starker trockener Belag auf der Oberfläche der Dachbahn.

In der Spalte 4 sind die Ergebnisse aufgelistet, die mit einer Dachbahn der Zusammensetzung Z₃ ermittelt wurden. Dabei wurde in das epoxidierte Sojabohnenöl (ESO) ein erfindungsgemäßer Hydrolysestablilisator eingearbeitet, wobei der Anteil 10 Gew.-% bezogen auf den Anteil des epoxidierten Sojabohnenöls betrug.

In der Spalte 5 sind die Ergebnisse aufgeführt, die eine Dachbahn der Zusammensetzung Z₃ betrifft, bei der der Füllstoff Kreide ebenfalls durch Kaolin ersetzt worden ist. Ein Hydrolysestabilisator ohne Carbodiimid wurde benutzt.

In der letzten Spalte wurde die Zusammensetzung Z₃ mit dem Füllstoff Kreide benutzt, jedoch kein Hydrolysestabilisator.

Die Beurteilungen entsprechen zuvor erfolgten Angaben:

### Verträglichkeitstest 70 °C, 98 % Luftfeuchtigkeit

| **Modifikation / Lagerdauer in Monaten** | **Kreide + Hydrolysestab.** | **Kaolin ohne Hydrolysestab.** | **Kreide + ESO/ Hydrolysestab.** | **Kaolin + Hydrolysestab.** | **Kreide ohne Hydrolysestab.** |
|---|---|---|---|---|---|
| 17 Wochen | 0 | 0 | 0 | 0 | 0 |
| 18 Wochen | 2 | 2 | 0 | 0 | 0 |
| 19 Wochen | 2 | 3 | 2 | 1 | 1 |
| 20 Wochen | 2 | 5 | 2 | 2 | 1 |
| 21 Wochen | 1 | 5 | 1 | 3 | 1 |
| 22 Wochen | 1 | | 1 | 3 | 3 |
| 23 Wochen | 1 | | 1 | 3 | 3 |
| 24 Wochen | 1 | | 1 | 5 | 4 |
| 25 Wochen | 0 | | 0 | | |
| 26 Wochen | 0 | | 0 | | |
| 27 Wochen | 0 | | 0 | | |
| 28 Wochen | 0 | | 0 | | |
| 29 Wochen | 0 (verhärtet) | | 0 (verhärtet) | | |

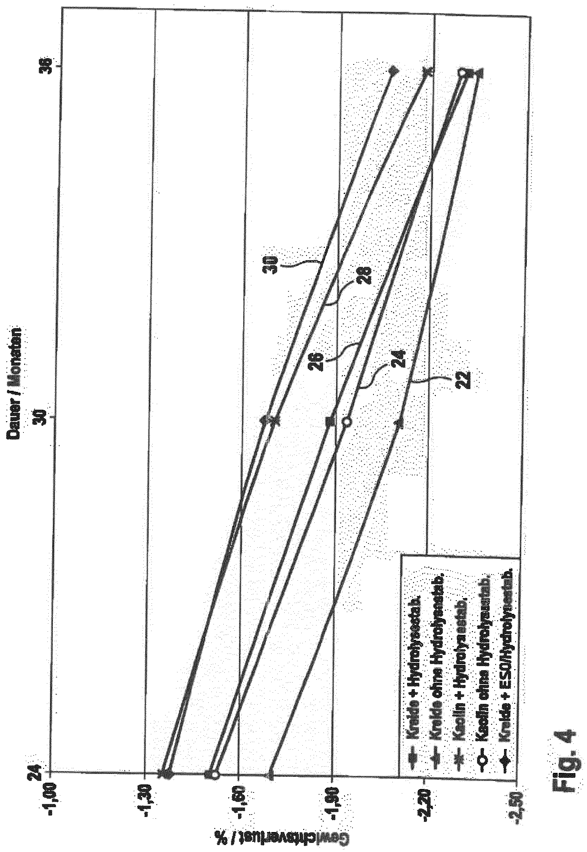

Der Fig. 4 ist das Ergebnis eines Freibewitterungstests zu entnehmen. Dabei wurden Bahnenproben aus durch Extrusion hergestellten PVC-Bahnen herausgetrennt. Die Zusammensetzung der Bahnen entsprach der Zusammensetzung Z₃, wobei entsprechend nachstehender Erläuterungen bei einigen Proben Kreide durch Kaolin ersetzt wurde bzw. Hydrolysestabilisatoren eingesetzt wurden.

Für die einzelnen Proben wurde zunächst das Ausgangsgewicht (Startgewicht) unter Laborumgebung ermittelt, d. h. bei 23 °C und 50 % Luftfeuchtigkeit. Nach der jeweiligen Bewitterungszeit werden die jeweiligen Proben zunächst eine Stunde in Laborumgebung (30 °C/50 % Luftfeuchtigkeit) gelagert und sodann bei einer Zeit von 16 Stunden bei 70 °C getrocknet. Anschließend wird das Gewicht bestimmt. Zur genauen Ermittlung des Gewichtes wird ein Mittelwert aus zwei bewitterten Proben erfasst. Der so ermittelte Gewichtsverlust wird relativ zum Startgewicht aufgetragen. Die Ergebnisse sind der Fig. 4 zu entnehmen. In der Abszisse ist die Bewitterungszeit und in der Ordinate der Gewichtsverlust in % gegenüber dem Startgewicht aufgetragen.

Die Zusammensetzungen der Proben, die den einzelnen Kurven zugeordnet sind, sind Folgende:
Die Kurve 22 betrifft eine Probe der Zusammensetzung Z₃, in der der Füllstoff Kreide in der Zusammensetzung enthalten war. Ein Hydrolysestabilisator war nicht eingearbeitet. Der Füllstoff Kreide war durch Kaolin bei den Proben gemäß Kurve 24 ausgetauscht worden. Ein Hydrolysestabilisator wurde nicht eingesetzt. Ein solcher war in die Zusammensetzung gemäß der durch die Kurve 26 repräsentierten Proben eingearbeitet. Der Füllstoff war Kreide. Wurde der Füllstoff Kreide durch Kaolin bei weiterhin vorhandenem Hydrolysestabilisator ausgetauscht, so ergab sich für entsprechende Proben die Kurve 28. Ein noch geringerer Gewichtsverlust wurde festgestellt, wenn der erfindungsgemäße Hydrolysestabilisator zuvor in das epoxidierte Sojabohnenöl eingearbeitet worden ist, wobei der Anteil des erfindungsgemäßen Hydrolysestabilisators 10 Gew.-% bezogen auf den Anteil des epoxidierten Sojabohnenöls betrug (Kurve 30).

Der Freibewitterungstest verdeutlicht gleichfalls, dass dann, wenn in eine PVC-Bahn ein erfindungsgemäßer Hydrolysestabilisator enthaltend zumindest ein Carbodiimid in die Ausgangszusammensatzung einer herzustellenden Kunststoffdachbahn eingebracht ist, die Hydrolyse im Vergleich zu einer Dachbahn gleicher Zusammensetzung ohne den erfindungsgemäßen Hydrolysestabilisator erheblich reduziert ist.

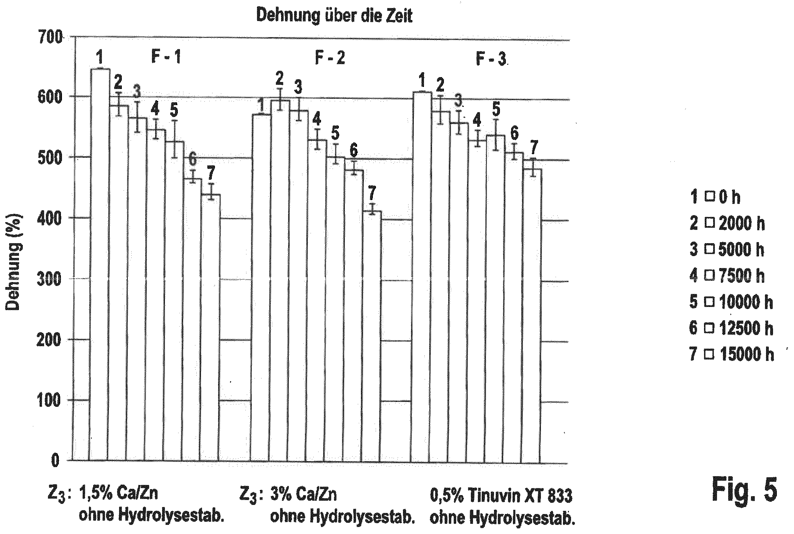

Fig. 5 zeigt die Dehnung von Dachbahnen verschiedener Zusammensetzung über verschiedene Alterungsstufen 1 - 7 gemäß WOM-Alterung, wobei F-1 die in der Patentanmeldung genannte Zusammensetzung Z₃ mit 1,5 % Ca/Zn-Stabilisator ohne Hydrolysestabilisator ist, F-2 die in der Anmeldung genannte Zusammensetzung Z₃ mit 3 % Ca/Zn-Stabilisator ohne Hydrolysestabilisator und F-3 die in der Anmeldung genannte Zusammensetzung Z₄ mit 0,5 % Ruß, insbesondere Tinuvin XT 833 ohne Hydrolysestabilisator ist. Die Ergebnisse zeigen, dass die Zusammensetzung, welche mit Tinuvin XT 833 zusätzlich ausgestattet wurde, einen positiven Beitrag zur Hydrolyse leisten; denn diese Zusammensetzung zeigt die geringste Abnahme der Dehnung über die Alterungsstufen 1 - 7.

## Patentansprüche

1. Verwendung einer Zusammensetzung enthaltend
• mindestens ein Carbodiimid ausgewählt aus der Gruppe bestehend aus monomeren aliphatischen Carbodiimiden, oligomeren aliphatischen Carbodiimiden, polymeren aliphatischen Carbodiimiden und
• zumindest einen Polyesterweichmacher
als Weichmacher für Polyvinylchlorid oder Polyvinylchlorid-Copolymer.

2. Verwendung nach Anspruch 1, **dadurch gekennzeichnet, dass** das aliphatische Carbodiimid durch die allgemeine Formel beschrieben ist: 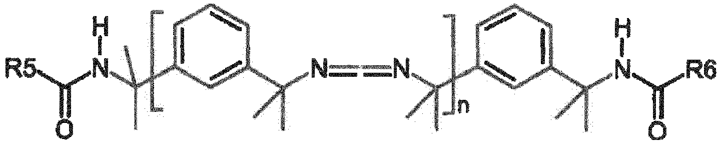 wobei n = 1 bis 20 ist und R5 und R6 methoxylierte Polyethylenglykolreste der Formel: -(EO)m-OCH3 mit m = 1 bis 20 sind.

## Claims

1. Use of a composition comprising at least one carbodiimide selected from monomeric, oligomeric, and polymeric aliphatic carbodiimides, and at least one polyester plasticizer as a plasticizer for polyvinyl chloride or polyvinylchloride copolymer.

2. The use according to claim 1, **characterized in that** the aliphatic carbodiimide is described by the general formula 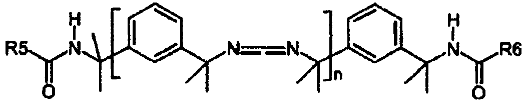 where n=1 to 20 and R5 and R6 are methoxylated polyethylene glycol residues of the formula -(EO)m-OCH3 with m=1 to 20.

## Revendications

1. Utilisation d'une composition comprenant au moins un carbodiimide choisi parmi les carbodiimides aliphatiques monomères, oligomères ou polymères, et au moins un plastifiant polyester en tant que plastifiant pour le polychlorure de vinyle (PVC) ou un copolymère de PVC.

2. Utilisation selon la revendication 1, **caractérisée en ce que** le carbodiimide aliphatique est décrit par la formule générale 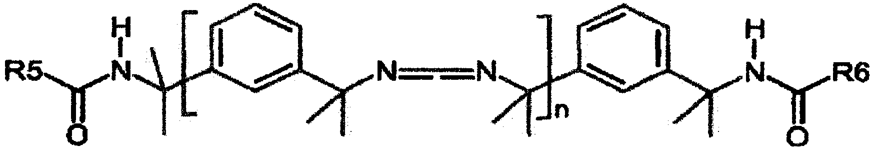 où n = 1 à 20 et où R5 et R6 sont des résidus de polyéthylèneglycol méthoxylés de formule -(EO)m-OCH3, avec m = 1 à 20.
